# EUROPEAN PATENT APPLICATION

(11) **EP 4 675 841 A1**
(43) Date of publication of application: **07.01.2026**
(21) Application number: 24763468.6
(22) Date of filing: 30.01.2024
(51) Int. Cl.: H01M 50/583, H01M 50/224, H01M 50/296, H01M 50/588, H01M 50/591

(54) **POWER SUPPLY DEVICE AND MAINTENANCE METHOD THEREFOR**

(30) Priority: 28.02.2023 JP 2023030514
(71) Applicant: Panasonic Energy Co., Ltd., Osaka 570-8511 (JP)
(72) Inventor: NAKAMURA, Takuo, Kadoma-shi, Osaka 571-0057 (JP); SASAJI, Katsuaki, Kadoma-shi, Osaka 571-0057 (JP)
(74) Representative: Eisenführ Speiser
(86) International application number: PCT/JP2024/002846
(87) International publication number: WO 2024/180983

(57) **Abstract**

A power supply device 100 includes an external output terminal 30, a battery assembly 10, a fusing unit 50 connected between the battery assembly 10 and the external output terminal 30, a breaker 60 connected between the battery assembly 10 and the external output terminal 30, and a housing 20 in which an internal storage space is defined for storing the battery assembly 10, the fusing unit 50, and the breaker 60. The breaker 60 is connected between the battery assembly 10 and the fusing unit 50. With the power supply device 100, cutting off the breaker 60 prevents the voltage of the battery assembly 10 from being generated in the fusing unit 50, thereby providing an advantage of ensuring safe replacement work of the fusing unit 50.

## Description

### TECHNICAL FIELD

The present disclosure relates to a power supply device and a maintenance method for the power supply device.

### BACKGROUND ART

In various fields including power storage applications, a power supply device containing a plurality of secondary battery cells stored in a housing has been used to drive an electrical device by a rechargeable secondary battery, such as a lithium-ion secondary battery (e.g., Patent Literature 1).

Conventionally, in power supply devices employing a metallic housing, replacing components such as, particularly, high-voltage components such as fuses has posed risks of short circuits, electric shocks, or the like, caused by tools. For example, when replacing a screw-fastened fuse or the like while it remains connected to the battery, there is a risk of short circuit if a metal tool such as a screwdriver comes into contact with the metal frame or a live part of opposite polarity. Moreover, small components such as screws may be dropped inside the battery pack during replacement work, posing a risk of short circuit or making it impossible to retrieve the screw that has entered the interior of the battery pack and perform the replacement work.

### CITATION LIST

### PATENT LITERATURE

Patent Literature 1: Japanese Unexamined Patent Application Publication No. 2009-158219

### SUMMARY OF INVENTION

### TECHNICAL PROBLEM

One object of the present disclosure is to provide a power supply device that enables safe replacement of a fusing unit such as a fuse and a maintenance method for the power supply device.

### SOLUTION TO PROBLEM

A power supply device according to one embodiment of the present disclosure includes an external output terminal, a battery assembly, a fusing unit connected between the battery assembly and the external output terminal, a breaker connected between the battery assembly and the external output terminal, and a housing in which an internal storage space is defined for storing the battery assembly, the fusing unit, and the breaker. The breaker is connected between the battery assembly and the fusing unit.

Further, a maintenance method for a power supply device according to another embodiment of the present disclosure is a maintenance method for a power supply device including an external output terminal, a battery assembly, a fusing unit connected between the battery assembly and the external output terminal, a breaker connected between the battery assembly and the external output terminal, and a housing in which an internal storage space is defined for storing the battery assembly, the fusing unit, and the breaker. The maintenance method includes a step of cutting off the breaker connected between the battery assembly and the fusing unit, and a step of replacing the fusing unit.

### ADVANTAGEOUS EFFECTS OF INVENTION

In the power supply device according to one embodiment of the present disclosure, cutting off the breaker prevents the voltage of the battery assembly from being generated in the fusing unit, thereby providing an advantage of ensuring safe replacement work of the fusing unit.

### BRIEF DESCRIPTION OF DRAWINGS

FIG. 1 is a perspective view of a power supply device according to Embodiment 1;
FIG. 2 is an exploded perspective view of the power supply device of FIG. 1;
FIG. 3 is a perspective view of a battery assembly and a battery block of FIG. 2;
FIG. 4 is a schematic cross-sectional block diagram of the power supply device of FIG. 1;
FIG. 5 is a schematic cross-sectional block diagram of a power supply device according to a comparative example;
FIG. 6 is a perspective view with an enlarged main part of the power supply device of FIG. 2;
FIG. 7 is an exploded perspective view of the power supply device of FIG. 6;
FIG. 8 illustrates an end face of the power supply device of FIG. 6; and
FIG. 9 illustrates an end face of a power supply device according to a modification example.

### DESCRIPTION OF EMBODIMENTS

The embodiments of the present disclosure may be specified by the following configurations and features.

A power supply device according to another embodiment of the present disclosure is as recited in the preceding embodiment, wherein the fusing unit is a replaceable component. This configuration allows easy access to the replaceable component by removing the detachable face, thereby improving workability during maintenance, such as replacement work of replaceable component.

A power supply device according to another embodiment of the present disclosure is as recited in any preceding embodiments, wherein the housing is formed into a box with a plurality of faces, one of the plurality of faces is a detachable face, which is detachable, and the fusing unit is disposed on an inner face side of the detachable face. This configuration allows easy access to the fusing unit by removing the detachable face, thereby improving workability during maintenance, such as replacement work of the fusing unit.

A power supply device according to another embodiment of the present disclosure is as recited in any preceding embodiments, wherein a selector switch of the breaker is disposed on the inner face side of the detachable face. This configuration allows the selector switch of the breaker to be manually cut off by removing the detachable face, thus allowing the breaker to be operated in addition to accessing the fusing unit, thereby improving workability during maintenance.

A power supply device according to still another embodiment of the present disclosure is as recited in any preceding embodiments, wherein an insulating isolated space where the fusing unit is disposed is formed inside the housing. With this configuration, even if a metal component such as a screw is accidentally dropped during, for example, the replacement work of the replaceable component of the fusing unit, the dropped component is retained within the isolated space, thereby preventing it from entering the interior of the housing and avoiding the risk of unintended short circuits or the like.

A power supply device according to still another embodiment of the present disclosure is as recited in any preceding embodiments, wherein, inside the housing, the isolated space is defined by a resin insulation cover that surrounds three faces including at least a lower face of a periphery of the fusing unit. With this configuration, safety is enhanced by surrounding the periphery of the fusing unit with a resin insulation cover, and it is also possible to avoid a situation in which a component such as a screw is dropped and enters the interior of the housing during replacement work of the fusing unit.

A power supply device according to still another embodiment of the present disclosure is as recited in any preceding embodiments, wherein, inside the housing, only a member or members having the same potential as the fusing unit are exposed within a region isolated by the isolated space. This configuration makes it possible to avoid electric shock even if a metal tool such as a screwdriver comes into contact during replacement work of the fusing unit inside the isolated space.

A power supply device according to still another embodiment of the present disclosure is as recited in any preceding embodiments, wherein the fusing unit is secured by screwing.

A power supply device according to still another embodiment of the present disclosure is as recited in any preceding embodiments, wherein the housing or an internal frame structure of the housing is made of metal.

A maintenance method for a power supply device according to still another embodiment of the present disclosure is as recited in any preceding embodiments, further including a step of removing a detachable face provided at a front face of the housing to expose the fusing unit. This configuration allows easy access to the fusing unit by removing the detachable face, thereby improving workability during maintenance, such as replacement work of the fusing unit.

Embodiments of the present disclosure are described below with reference to the drawings. However, the embodiments shown below are only examples to illustrate the technical concepts of the present disclosure, and the present disclosure is not limited to these embodiments. Further, this specification does not limit any member in the claims to the members described in these embodiments. The dimensions, materials, shapes, relative positions, etc. of the components described in these embodiments are not intended to limit the scope of the present disclosure unless particularly otherwise specified, and are merely illustrative. It should be noted that the sizes, positional relationships, etc. of the members shown in the drawings may be exaggerated for clarity in the description. Furthermore, in the following description, the same names and reference numbers indicate the same or similar members, and detailed descriptions are omitted as appropriate. Furthermore, each element constituting the present disclosure may has an aspect in which a plurality of elements is formed from the same member and a single member serves as a plurality of elements; conversely, a function of a single member can also be implemented by being shared among a plurality of members.

The power supply device of the present disclosure can be used as a stationary power supply device, such as a backup power supply for servers, a power storage device for storing electricity generated by solar power or the like for households, business establishments, and factories, a power supply for peak cut during daytime, and the like. The power supply device of the present disclosure can also be used for other battery packs, for example, a power supply for an electric scooter for home delivery and the like, an electric cart for use in locations such as golf courses, factories, and airports, and a self-propelled robot for home delivery, as well as a power supply for driving construction machinery or vehicles such as hybrid vehicles and electric vehicles. An indoor power supply device for power storage is described below as one embodiment of the present disclosure.

### [EMBODIMENT 1]

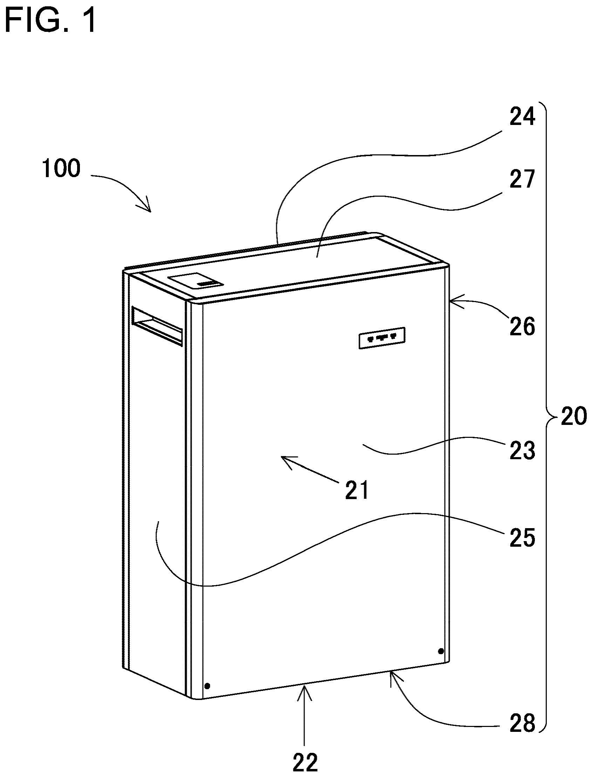

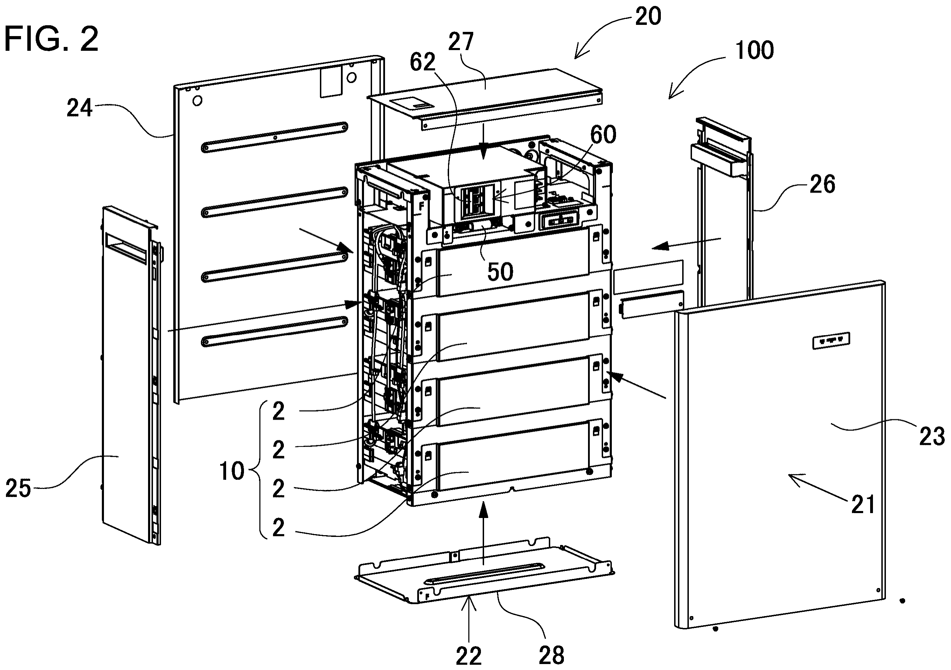

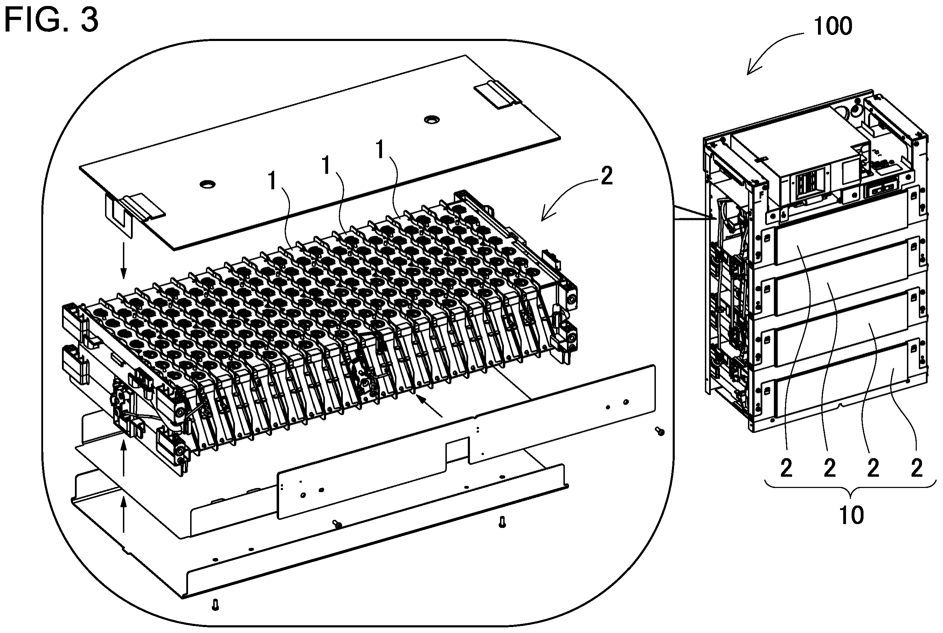

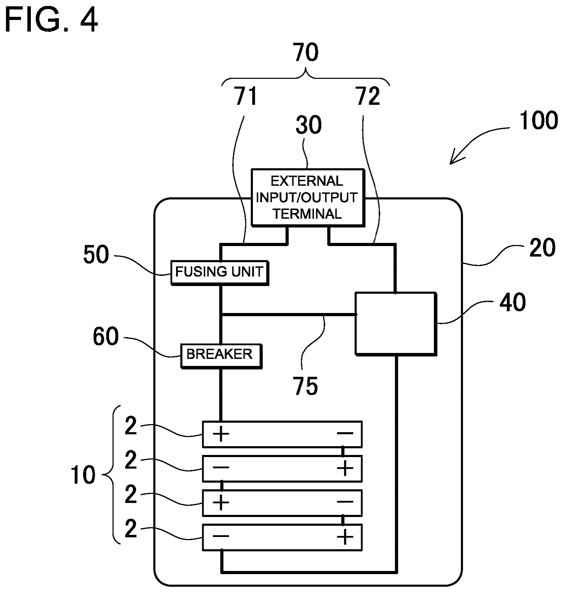

FIGs. 1 to 4 illustrate a power supply device 100 according to Embodiment 1 of the present disclosure. In these drawings, FIG. 1 is a perspective view of a power supply device 100 according to Embodiment 1, FIG. 2 is an exploded perspective view of the power supply device 100 of FIG. 1, FIG. 3 is a perspective view of a battery assembly 10 and a battery block of FIG. 2, and FIG. 4 is a schematic cross-sectional block diagram of the power supply device 100 of FIG. 1. The power supply device 100 shown in these figures includes a housing 20, an external output terminal 30, a total output path 70, a battery block 2, a circuit board 40, a fusing unit 50, and a breaker 60.

### (Housing 20)

The housing 20 includes an internal frame structure serving as the framework to which the battery block 2 is secured, and has an outer shape formed into a box, as shown in FIG. 1. In this example, the housing 20 has a vertically elongated rectangular outer shape. The outer face of the housing 20 is constituted of a plurality of faces. One of the plurality of faces serves as a detachable face 21, which is detachable. Further, another face of the housing 20 serves as an installation face 22 that faces an installation region such as the floor. In the example of FIG. 2, the exterior of the housing 20 is constituted of six panels: a front panel 23, a rear panel 24, a left panel 25, a right panel 26, a top panel 27, and a bottom panel 28. Here, the front panel 23 serves as the detachable face 21, and the bottom panel 28 serves as the installation face 22. The front panel 23 is coupled to the front of the housing 20 while being detachable, for example, by screwing or engagement. With this configuration, the front panel 23 and the top panel 27 can also be made detachable from the front of the housing 20, thereby facilitating works such as drawing wiring from the back side during installation of the power supply device 100.

The shape of the housing is not limited to this and may instead be cylindrical, polygonal, or the like. Further, for example, if a vertically elongated housing is placed horizontally, a long narrow face serves as the installation face. Such the housing 20 preferably has an internal frame structure and exterior panels made of metal.

Further, the interior of the housing 20 is a hollow storage space. As shown in FIG. 2, various members including the battery block 2, the circuit board 40, and the fusing unit 50 are stored in the storage space. The interior of the housing 20 is partitioned into a battery accommodation section, which accommodates the battery assembly 10 by a metallic plate-shaped frame disposed on the internal frame structure above the uppermost battery block 2, and an electrical component accommodation section, which accommodates an electrical component box for storing electrical components such as the circuit board 40 and the fusing unit 50. The housing 20 and the internal frame structure of the housing 20 are preferably made of metal with an excellent strength.

### (Battery Block 2)

The battery block 2 includes a plurality of secondary battery cells 1, as shown in FIG. 3. The battery block 2 holds the plurality of secondary battery cells 1 with a frame body. The plurality of secondary battery cells 1 are stacked in an orientation in which they are close to each other. Further, the electrodes of the secondary battery cells 1 are connected to each other by lead plates in series or in parallel.

### (Battery Assembly 10)

Further, the power supply device 100 can also include a plurality of battery blocks 2. In the examples of FIGs. 2 and 4, four battery blocks 2 are stacked to form one battery assembly 10. As shown in FIG. 3, each battery block 2 constituting the battery assembly 10 includes a large number of secondary battery cells 1. In the example of FIG. 3, cylindrical secondary battery cells 1 are arranged in an upright orientation and connected in series and in parallel by lead plates. In this example, six secondary battery cells are connected in parallel and twenty-one secondary battery cells are connected in series. The number of secondary battery cells constituting the battery block, as well as the number of secondary battery cells connected in series and in parallel, are not limited to those shown in this example, and are appropriately designed according to, for example, specifications required for the power supply device. Further, similarly, the number of battery blocks to be stacked is also designed according to the specifications and the like. This battery assembly 10 is disposed in proximity to the side of the installation face 22 inside the housing 20.

### (Secondary Battery Cell 1)

Each secondary battery cell 1 has positive and negative electrodes. The positive or negative electrode is preferably disposed on one of the end faces of the secondary battery cell 1. For such the secondary battery cell 1, known secondary batteries can be used as appropriate, such as lithium-ion secondary batteries, nickel-metal hydride batteries, or nickelcadmium batteries. Further, the outer can of the secondary battery cell may have a cylindrical, prismatic, or pouch-like shape.

### (Circuit Board 40)

The circuit board 40 is electrically connected to the battery assembly 10. The circuit board 40 includes a protection circuit, a charging/discharging circuit, and the like, for the secondary battery cells 1. The circuit board 40 is a rectangular plate. As shown in FIG. 3, the circuit board 40 is disposed in a horizontal orientation on the upper face of the battery assembly 10. However, the orientation of disposing the circuit board 40 is not limited to the horizontal orientation and may instead be a vertical orientation. Suitable material examples of the circuit board 40 include rigid resins such as glass-epoxy substrates and ceramics.

### (Total Output Path 70)

The total output path 70 is an electrical path electrically connected to the total output of the battery assembly 10 and constitutes a power line. The total output path 70 is constituted of conductors such as harnesses and leads. On the total output path 70, the battery assembly 10, the breaker 60, the fusing unit 50, the circuit board 40, and the like, are disposed and electrically connected to each other. In the example of FIG. 4, a power feed line 75 is branched from the total output path 70. The power feed line 75 is a line for obtaining a board activation voltage necessary to operate various circuits mounted on the circuit board 40. The power feed line 75 is branched from the total output path 70 via a voltage converter that performs necessary voltage conversion.

### (External Output Terminal 30)

The external output terminal 30 is a terminal for outputting the total output of the battery assembly 10 to the outside. The external output terminal 30 is connected to the total output of the battery assembly 10 via the total output path 70. The total output path 70 includes a total positive line 71 that connects a positive-side terminal of the total output terminals of the battery assembly 10 to the external output terminal 30, and a total negative line 72 that connects a negative-side terminal of the total output of the battery assembly 10 to the external output terminal 30. In the example of FIG. 4, the breaker 60 and the fusing unit 50 are disposed on the path of the total positive line 71, and the circuit board 40 is disposed on the path of the total negative line 72.

Preferably, the external output terminal 30 is disposed on the face of the housing 20 opposite to the installation face 22, which is the top surface side in the example of FIG. 4. Further, the external output terminal 30 may also serve as an external input/output terminal having an input terminal from outside.

### (Breaker 60)

The breaker 60 and the fusing unit 50 are provided between the battery assembly 10 and the external output terminal 30. In the example of FIG. 4, on the path of the total positive line 71, the breaker 60 is provided on the side of the battery assembly 10, and the fusing unit 50 is provided on the side of the external output terminal 30. The breaker 60 is a member that enhances safety by cutting off the electrical path when an overcurrent is detected in the total output from the battery assembly 10. The breaker 60 is a resettable member that can be opened and closed. The breaker 60 allows the user to manually restore the electrical path from a cut-off state to a connected state. Further, the breaker 60 shown in FIG. 2, etc., includes a selector switch 62 that allows manual switching between ON and OFF.

The breaker 60 is preferably disposed on the upper face side of the battery assembly 10. This allows dual protection of the power supply device 100 by the fusing unit 50 and the resettable breaker 60.

### (Fusing Unit 50)

The fusing unit 50 is connected between the battery assembly 10 and the external output terminal 30. The fusing unit 50 is also a member that enhances safety by cutting off the electrical path when an overcurrent is detected. However, once the fusing unit 50 detects an overcurrent, it remains in the cut-off state and does not recover even after the overcurrent subsides. The fusing unit 50 is a non-resettable member that cuts off the conductive path by fusing. A fuse can be suitably used as such the fusing unit 50. In this way, the power supply device 100 enhances dual safety by the breaker 60 and the fusing unit 50. The operating current of the breaker 60 is set lower than that of the fusing unit 50. Thus, it is possible to provide the first protection with the operating current of the breaker 60, and the second protection with the operating current of the fusing unit 50.

The fusing unit 50 may be formed of a relay or breaker instead of a fuse. By using such a fusing unit with a recovery function, the power supply device 100 can be reused when the current falls below the operating current of the fusing unit. In the present disclosure, the term "fusing unit" is used to include, regardless of its name, elements such as relays and breakers that are capable of recovery operation. Furthermore, in the present disclosure, the term "fusing" of the fusing unit is not limited to a configuration in which a current is cut off by temperature-based fusing such as a thermal fuse, but also includes those in which the fusing unit is opened to cut off currents when it is a relay, breaker, switch, or the like.

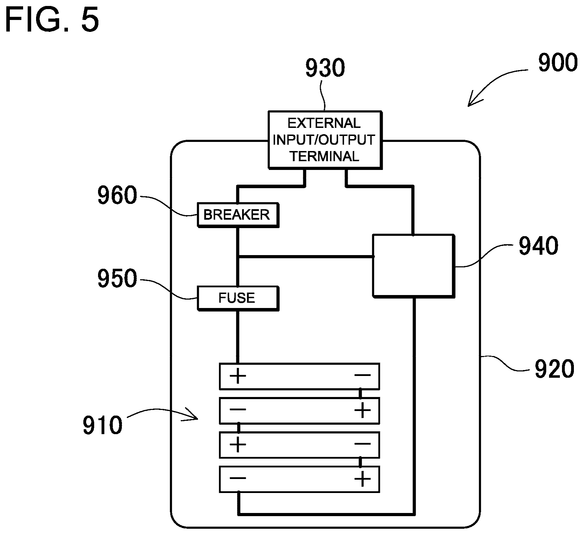

FIG. 5 shows a power supply device 900 according to a comparative example. The power supply device 900 shown in the figure includes a battery assembly 910, a circuit board 940, a breaker 960, a fuse 950, and an external output terminal 930. This power supply device 900 employs a metallic housing 920. Further, the internal frame structure of the housing 920 is also made of metal. In such the power supply device 900 constituted of a conductive material, it has been necessary to take precautions to prevent unintended conduction during maintenance or other similar operations. Since different potentials may be present at portions where components are connected, if they are unintentionally brought into conduction, there is a risk of short circuit or electric shock. For example, when replacing replaceable components such as the fuse 950, it is necessary to disassemble the housing 920 using tools. However, during this work, there is a possibility that the metallic part of the tool may unintentionally be brought into contact with the housing 920 or the frame, thereby causing a short circuit or the like. Moreover, when a screw-fastened fuse 950 or the like is replaced with 910 connected to the fuse 950, there is a possibility that a metallic tool such as a screwdriver may be brought into contact with the metallic frame or a live part of opposite polarity, resulting in a short circuit or electric shock. In particular, as the demand for higher output in recent years has increased the power output of power supply devices, it has been required to ensure safety against unintended conduction. This requires to take precautions such as wearing protective equipment, for example, insulated gloves, during the work, involving the inconvenience of preparing and putting on such equipment.

In contrast, as shown in FIG. 4, the power supply device 100 according to the present embodiment has a configuration in which the breaker 60 is interposed between the fusing unit 50 and the battery assembly 10. Thus, cutting off the breaker 60 can securely avoid a situation of applying high voltages to the fusing unit 50. This can ensure safety even if the protective member such as insulated gloves is not available or even if protective equipment is not worn.

Further, in the power supply device 100 shown in FIG. 5, during replacement work such as replacing the fuse 950, there is a possibility that a small component, such as a screw, may be accidentally dropped into the interior of the power supply device. In this case, it is considered that the screw dropped rolls inside the housing and causes a short circuit. Furthermore, if the screw has a special shape and no spare is available, it is also considered that the screw that has entered the interior of the housing cannot be retrieved and the replacement work cannot be performed.

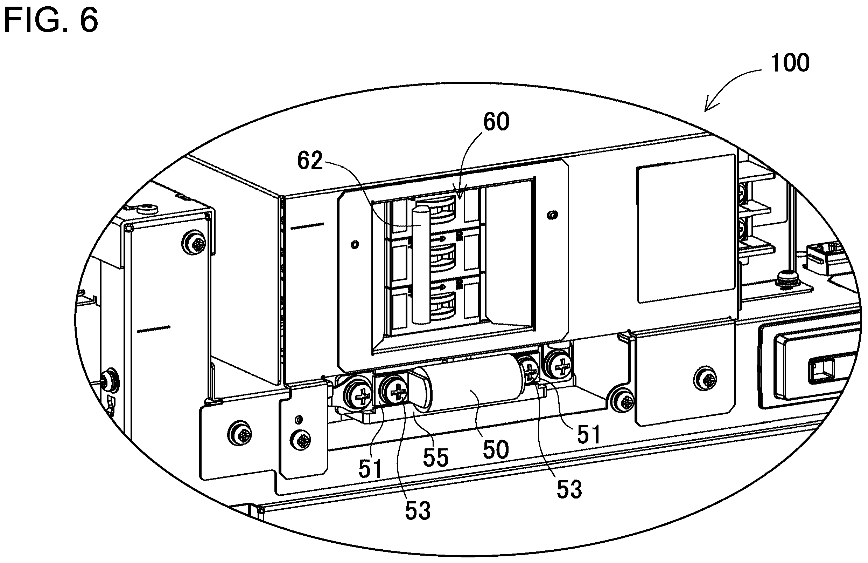

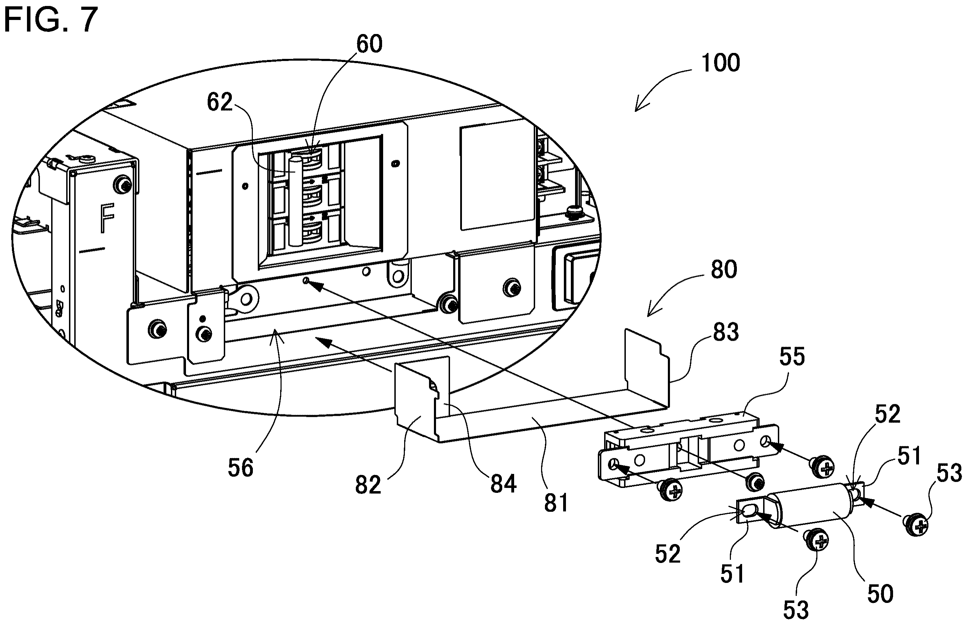

In contrast, the power supply device 100 according to the present embodiment forms, inside the housing 20, an insulating isolated space where the fusing unit 50 is disposed, as shown in FIGs. 6 and 7. With this configuration, even if a metal component such as a screw is accidentally dropped during, for example, the replacement work of the fusing unit 50, the dropped screw can be kept within the isolated space. As a result, the risk of unintended short circuits or the like caused by metal components entering the interior of the housing 20 can be prevented. It can also prevent a situation of losing metal components.

### (Insulation Cover 80)

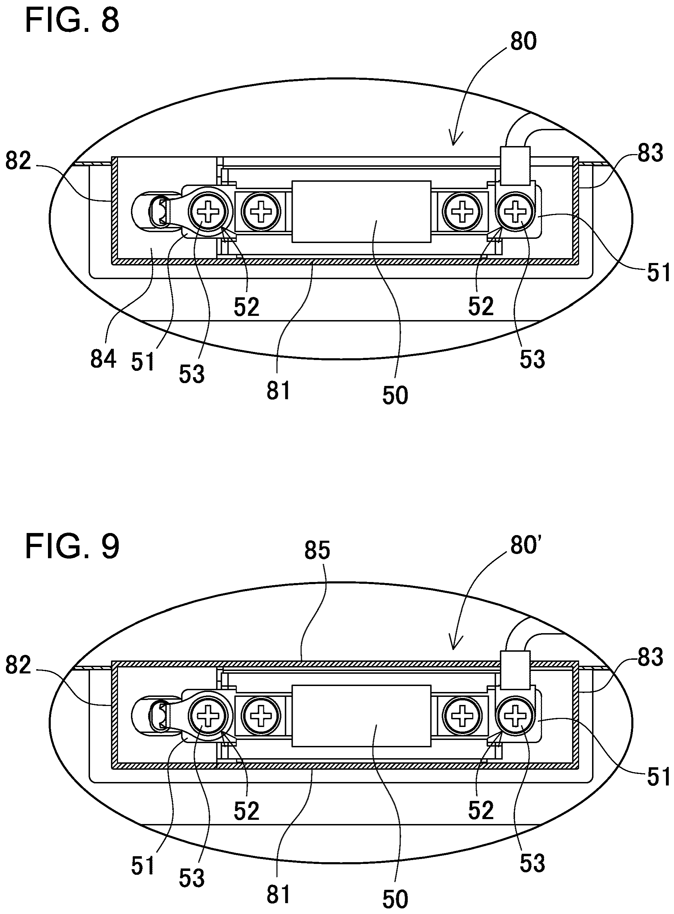

The isolated space is defined by an insulation cover 80 having insulating properties. The insulation cover 80 surrounds three faces including at least the lower face of the periphery of the fusing unit 50. Here, the "lower face" refers to the side of the installation face 22 on which the housing 20 is installed. In the power supply device 100 according to the present embodiment, the lower face of the insulation cover 80 is insulated from the installation face of the electrical component box formed by the plate-shaped frame that partitions the battery accommodation section and the electrical component accommodation section. In the examples shown in the exploded perspective view of FIG. 7 and the cross-sectional view of FIG. 8, the insulation cover 80 includes a lower cover 81 that covers the lower part of the fusing unit 50 and left and right covers 82 and 83 that cover the left and right sides of the fusing unit 50, respectively. Such the insulation cover 80 forms a lateral U-shape when viewed from a cross section. Thus forming the insulation cover 80 into a lateral U-shape in which the upper part is opened allows the insulation cover 80 to serve as like a tray, keeping dropped components within the isolated space.

Further, in the example of FIG. 7, the insulation cover 80 also includes a rear cover 84 that covers a part of the back side of the fusing unit 50. The rear cover 84 is connected to the lower cover 81 and the left cover 82 at their end faces, functioning as a rib of the insulation cover 80. Note that the rear cover 84 may also be formed to cover the entire rear face of the fusing unit 50.

The insulation cover 80 is made of a resin such as polycarbonate or ABS. The insulation cover 80 made of resin can be manufactured at low cost. Alternatively, the insulation cover 80 may be made of a soft material such as rubber. The insulation cover 80 may also be formed from an insulation plate obtained by coating the surface of a metal plate with an insulating PET sheet or the like.

Preferably, all faces of the insulation cover 80 are integrally formed. However, the insulation cover 80 may individually form each of the faces to couple them together.

Further, although the insulation cover 80 shown in FIGs. 7 and 8 opens an upper face of the fusing unit 50, the present disclosure is not limited to this configuration, and, as in the modification example shown in FIG. 9, an upper cover 85 that covers the upper face of the fusing unit 50 may be added to an insulation cover 80'.

On the other hand, within the housing 20, metal members, such as terminals or components, to be exposed within the region isolated by the isolated space preferably has a configuration in which only components having the same potential as that of the fusing unit 50 are exposed. This configuration makes it possible to avoid a situation of incurring conduction or electric shock even if a metal tool such as a screwdriver, or a removed component and the like comes into contact during replacement work of the fusing unit 50 within the isolated space. Therefore, even if the operator fails to comply with the work procedures, such as failing to wear appropriate protective equipment, safe operation can still be ensured.

With the configuration described above in which the breaker 60 is interposed between the fusing unit and the battery assembly 10, cutting off the breaker 60 can easily prevent a high potential from being generated at the connection portion of the fusing unit. In addition, it is preferable to form the configuration such that opposite polarities, etc. of other components are not exposed in the isolated space.

The fusing unit 50 is secured by screwing. As shown in the exploded perspective view of FIG. 7, fuse terminals 51 are provided on the left and right sides of the fuse that constitutes the fusing unit 50, and screws 53 are threaded into fuse screw holes 52 formed in the respective fuse terminals 51 to secure the fusing unit inside the housing 20. This fusing unit 50 is configured such that, inside the housing 20, the insulation cover 80 and a fuse holder 55 are secured in a depression 56 formed on the upper face of the battery assembly 10. The fuse, which serves as the fusing unit 50, is secured to the fuse holder 55 by screwing.

Further, the fusing unit 50 is disposed on the inner face side of the detachable face 21. In the example of FIG. 2, the fusing unit 50 is provided on the rear face side of the front panel 23, which serves as the detachable face 21. With this configuration, the fusing unit 50 can be easily accessed by removing the detachable face 21. For example, as shown by the arrow in FIG. 6, simply removing the front panel 23 allows access to the interior of the housing 20 from the front face of the housing 20. Therefore, by disposing the fusing unit 50 and other replaceable components on the front face side of the housing 20, that is, on the back side of the front panel 23, component replacement and other works can be carried out, thereby improving workability during maintenance.

In addition, it is preferable to likewise dispose the selector switch 62 of the breaker 60 on the rear side of the detachable face 21. With such a configuration, as shown in FIGs. 2 and 7, removing the front panel 23 enables operation of the breaker 60, making it possible to perform replacement work of the fusing unit 50 after turning off the selector switch 62 of the breaker 60.

Preferably, the selector switch 62 of the breaker 60 is disposed in proximity to the fusing unit 50. This allows to easily perform the replacement work of the fusing unit 50 together with turning off the selector switch 62 of the breaker 60, and also provides an effect of preventing omission of the operation of the selector switch 62. For example, the selector switch 62 can be disposed above or below the fusing unit 50, or to the left or right of the fusing unit 50. In the examples of FIG. 7, etc., the selector switch 62 is disposed in proximity to the upper part of the fusing unit 50.

### [Maintenance Method for Power Supply Device 100]

A maintenance method for the power supply device 100 is described below. Here, a method for replacing the fusing unit 50, which is an example of replaceable component, is described.

First, as shown in FIG. 2, the detachable face 21 provided at the front face of the housing 20 is removed to expose the fusing unit 50. In this example, the front panel 23 is removed from the housing 20.

Next, the breaker 60 connected between the battery assembly 10 and the fusing unit 50 is cut off. Specifically, the selector switch 62 of the breaker 60 shown in FIG. 7 is manually turned off.

In this state, the fusing unit 50 is replaced. Specifically, the screws provided at both ends of the fuse, i.e., the fusing unit 50, are removed, and a new fuse is installed and secured by screwing.

Then, the selector switch 62 of the breaker 60 is turned back on. Finally, the front panel 23 is attached to the housing 20. In this way, cutting off the breaker 60 allows safe replacement work of the fusing unit 50 in a state of not generating the voltages of the battery assembly 10 in the fusing unit 50.

In the above examples, the power supply device is attached to an electrical device to be driven to supply power to the device. Additionally, when the remaining capacity of the power supply device is low or when the power supply device deteriorates over time, the power supply device can be replaced so that the electrical device remains usable. However, the power supply device of the present disclosure is not limited to a replaceable power supply device that typically stores secondary battery cells. The present disclosure is also applicable to embodiments in which secondary battery cells are stored within a housing of an electrical device. In the present disclosure, it is sufficient that a power supply device refers to the one in which secondary battery cells are stored in a housing such as a case, and thus the one in which secondary battery cells for driving are built into a housing of an electrical device itself is also referred to as a power supply device. In other words, the present disclosure is not limited to replaceable power supply devices, and is also applicable to electrical devices with built-in secondary battery cells.

### INDUSTRIAL APPLICABILITY

The power supply device and the maintenance method for the power supply device according to the present disclosure can be used for a stationary power supply device, such as a backup power supply for servers, a power storage device for storing electricity generated by solar power or the like for households, business establishments, and factories, a power supply for peak cut during daytime, and the like. The power supply device and the maintenance method for the power supply device according to the present disclosure can also be used for other battery packs, for example, a power supply for an electric scooter for home delivery and the like, an electric cart for use in locations such as golf courses, factories, and airports, and a self-propelled robot for home delivery, as well as a power supply for driving construction machinery or vehicles such as hybrid vehicles and electric vehicles.

### REFERENCE SIGNS LIST

100 ... power supply device
1 ... secondary battery cell
2 ... battery block
10 ... battery assembly
20 ... housing
21 ... detachable face
22 ... installation face
23 ... front panel
24 ... rear panel
25 ... left panel
26 ... right panel
27 ... top panel
28 ... bottom panel
30 ... external output terminal
40 ... circuit board
50 ... fusing unit
51 ... fuse terminal
52 ... fuse screw hole
53 ... screw
55 ... fuse holder
56 ... depression
60 ... breaker
62 ... selector switch
70 ... total output path
71 ... total positive line
72 ... total negative line
75 ... power feed line
80, 80' ... insulation cover
81 ... lower cover
82 ... left cover
83 ... right cover
84 ... rear cover
85 ... upper cover
900 ... power supply device
910 ... battery assembly
920 ... housing
930 ... external input/output terminal
940 ... circuit board
950 ... fuse
960 ... breaker

## Claims

1. A power supply device comprising:
an external output terminal;
a battery assembly;
a fusing unit connected between the battery assembly and the external output terminal;
a breaker connected between the battery assembly and the external output terminal; and
a housing in which an internal storage space is defined for storing the battery assembly, the fusing unit, and the breaker,
wherein the breaker is connected between the battery assembly and the fusing unit.

2. The power supply device as recited in claim 1, wherein the fusing unit is a replaceable component.

3. The power supply device as recited in claim 2, wherein
the housing is formed into a box with a plurality of faces,
one of the plurality of faces is a detachable face, which is detachable, and
the fusing unit is disposed on an inner face side of the detachable face.

4. The power supply device as recited in claim 3, wherein a selector switch of the breaker is disposed on the inner face side of the detachable face.

5. The power supply device as recited in claim 1, wherein an insulating isolated space where the fusing unit is disposed is formed inside the housing.

6. The power supply device as recited in claim 5, wherein inside the housing, the isolated space is defined by a resin insulation cover that surrounds three faces including at least a lower face of a periphery of the fusing unit.

7. The power supply device as recited in claim 5, wherein
inside the housing, only a member or members having the same potential as the fusing unit are exposed within a region isolated by the isolated space.

8. The power supply device as recited in any one of claims 1 to 7, wherein
the fusing unit is secured by screwing.

9. The power supply device as recited in any one of claims 1 to 7, wherein
the housing or an internal frame structure of the housing is made of metal.

10. A maintenance method for a power supply device, the power supply device comprising:
an external output terminal;
a battery assembly;
a fusing unit connected between the battery assembly and the external output terminal;
a breaker connected between the battery assembly and the external output terminal; and
a housing in which an internal storage space is defined for storing the battery assembly, the fusing unit, and the breaker,
the maintenance method comprising:
a step of cutting off the breaker connected between the battery assembly and the fusing unit; and
a step of replacing the fusing unit.

11. The maintenance method for a power supply device as recited in claim 9, further comprising
a step of removing a detachable face provided at a front face of the housing to expose the fusing unit.
